# FASCICULE DE BREVET EUROPEEN

(11) **EP 1 501 164 B1**
(45) Date de publication et mention de la délivrance du brevet: **14.10.2009**
(21) Numéro de dépôt: 04291805.2
(22) Date de dépôt: 15.07.2004
(51) Int. Cl.: H02G 3/08

(54) **Boite électrique à membrane souple formant une entrée de gaine**
Elektrische Dose mit flexibler Membran zur Herstellung eines Eingangsrohrs
Electric box with a flexible membrane forming the entrance of a sleeve

(30) Priorité: 23.07.2003 FR 0308968
(43) Date de publication de la demande: 26.01.2005
(73) Titulaire: Legrand France S.A., 87000 Limoges (FR); Legrand SNC, 87000 Limoges (FR)
(72) Inventeur: Favalessa, Thierry, 87240 Ambazac (FR)
(74) Mandataire: Orsini, Fabienne

(56) Documents cités:
- EP-A- 0 550 839
- DE-B- 1 083 382
- FR-A- 2 367 403

## Description

La présente invention concerne de manière générale les boîtes électriques à encastrer, destinées à recevoir des câbles et/ou des conducteurs électriques.

De telles boîtes sont notamment des boîtes pour appareillages électriques, des boîtes de dérivation de câbles et/ou de conducteurs électriques et des boîtes formant tableaux d'abonnés.

L'invention trouve une application particulièrement avantageuse dans la réalisation d'une boîte électrique à encastrer dans une cloison sèche telle qu'une cloison alvéolaire.

Elle concerne en particulier une boîte électrique selon les caractéristiques du préambule de la revendication 1.

On connaît déjà du document FR 2 464 585 une boîte électrique telle que précitée dans laquelle chaque membrane souple est formée par constriction de la partie rigide de sorte que ladite membrane souple s'étend au fond d'un renfoncement de ladite partie rigide.

Selon ce document FR 2 464 585, l'ouverture de chaque membrane souple est obturée par un bouchon rapporté dans ledit renfoncement de la partie rigide au fond duquel s'étend ladite membrane souple, ce bouchon comportant un téton central qui est engagé dans ladite ouverture de la membrane.

Une telle boîte électrique présente comme principal inconvénient qu'elle est complexe à réaliser du fait qu'elle comprend plusieurs parties assemblées entre elles à savoir la partie rigide pourvue des membranes souples et les bouchons obturant les ouvertures desdites membranes.

Sa complexité de réalisation provient également du fait que sa partie rigide pourvue desdites membranes souples doit être réalisée à l'aide d'une machine de moulage et de formage, qui, dans un premier temps, moule ladite partie rigide et, dans un deuxième temps, forme par constriction lesdites membranes souples.

Cette complexité de réalisation entraîne un coût de fabrication élevé.

En outre, avant d'encastrer une telle boîte électrique, l'installateur peut en manipulant cette boîte électrique perdre un ou plusieurs desdits bouchons et la boîte n'assure plus alors l'étanchéité requise du fait de la présence des ouvertures des membranes souples.

On connaît également du document EP 0 550 839 une boîte électrique comportant une paroi latérale équipée d'une pluralité de membranes pour l'entrée de gaines à l'intérieur de la boîte. Chaque membrane comporte une zone centrale d'épaisseur supérieure au reste de la membrane, bordée d'une rainure de faible résistance permettant d'enfoncer la zone centrale pour créer une ouverture capable d'accueillir ladite gaine.

L'inconvénient d'une telle boîte est qu'il n'est possible de rapporter une extrémité d'une gaine dans la boîte que suivant une unique direction, orthogonalement au plan de la paroi latérale.

Afin de remédier aux inconvénients précités, la présente invention propose une boîte électrique à encastrer qui est simple de réalisation et dont le moyen d'obturation de l'ouverture de chaque membrane qu'elle comporte est imperdable.

Plus particulièrement, l'invention propose une boîte électrique selon les caractéristiques de la revendication 1.

Ainsi, grâce à la souplesse de ladite membrane, la boîte électrique selon l'invention permet de rapporter une extrémité d'une gaine de transport de câbles et/ou de conducteurs électriques en autorisant un mouvement de pivotement de la gaine d'une amplitude de 90° tout en assurant au niveau de l'entrée de la gaine dans la boîte électrique une étanchéité à l'air et/ou à la poussière

D'autres caractéristiques non limitatives et avantageuses de la boîte électrique selon l'invention sont énoncée dans les revendications 2 à 9.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective arrière d'un mode de réalisation de la boîte électrique selon l'invention ;
- la figure 2 est une vue schématique en perspective avant de la boîte électrique de la figure 1 ;
- la figure 3 est une vue partielle en perspective de détail de la boîte électrique de la figure 1 avec une extrémité de gaine prête à être insérée dans ladite boîte ; -
- les figures 4 et 5 sont des vues en perspective avant montrant deux étapes d'insertion d'une extrémité de gaine à l'intérieur de ladite boîte au travers d'une membrane souple ;
- la figure 6 est une vue partielle en perspective de détail de la boîte électrique de la figure 1 avec l'extrémité de gaine insérée dans ladite boîte au travers de ladite membrane ; et
- la figure 7 est une vue de côté de la boîte électrique de la figure 1 montrant les deux orientations possibles pour une gaine insérée dans ladite boîte.

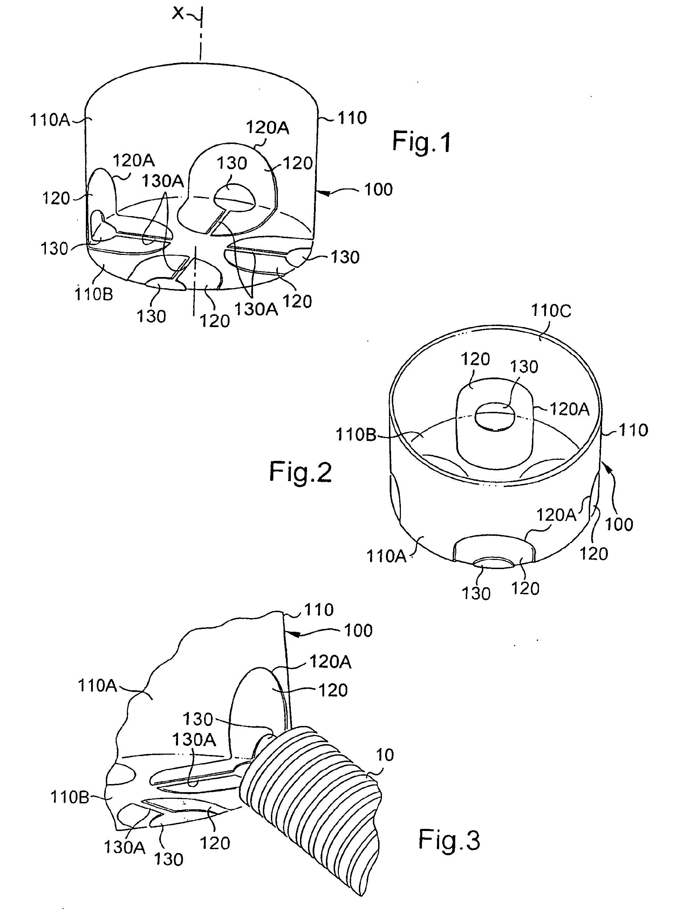

Sur les figures 1 à 7 on a représenté une boîte électrique 100 d'axe X à encastrer, ici une boîte d'encastrement d'un appareillage électrique, destinée à recevoir non seulement l'appareillage électrique en question non représenté, mais aussi les câbles et/ou les conducteurs électriques nécessaires à son alimentation.

Cette boîte électrique 100 est avantageusement destinée à être encastrée dans une cloison sèche (non représentée) du type cloison alvéolaire.

Elle comprend une partie rigide 110 constituée par une paroi latérale 110A et un fond 110B. La paroi latérale 110A est ici cylindrique de révolution autour de l'axe X. Elle s'élève à partir du fond 110B circulaire. À l'opposé du fond 110B, la boîte électrique 100 comporte une ouverture circulaire 110C permettant l'introduction du mécanisme d'appareillage électrique dans ladite boîte électrique 100.

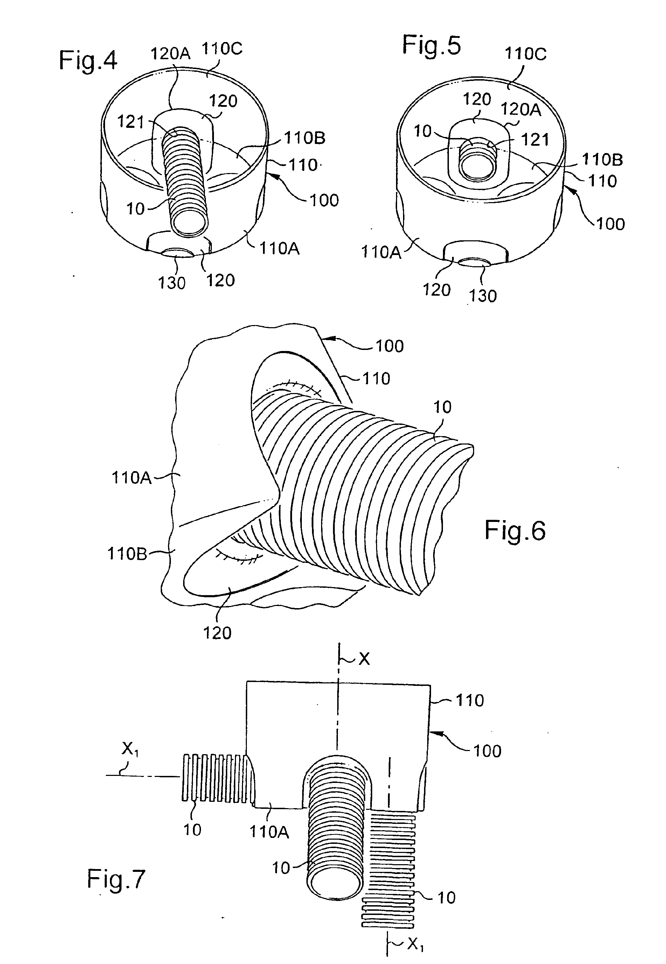

La partie rigide 110 de la boîte électrique 100 est pourvue d'une pluralité de membranes souples 120, ici quatre membranes souples 120, réparties sur son pourtour et formant des entrées pour des gaines 10 de transport de câbles et/ou de conducteurs électriques (voir figure 7).

Chaque membrane souple 120 est percée à cet effet d'une ouverture 121 destinée à accueillir l'extrémité coupée d'une gaine 10 de transport de câbles et/ou de conducteurs électriques pour permettre l'entrée dans la boîte électrique des câbles et/ou des conducteurs nécessaires à la desserte de l'appareillage électrique correspondant.

Bien entendu, selon une variante non représentée, on peut prévoir que la boîte électrique selon l'invention comporte dans sa partie rigide une seule membrane d'entrée de câbles et/ou de conducteurs électriques.

Avantageusement, selon l'invention, chaque ouverture 121 de chaque membrane souple 120 est obturée par une pastille rigide 130 détachable qui forme avec ladite membrane souple 120 et ladite partie rigide 110 une pièce monobloc réalisée par moulage d'une matière plastique.

La partie rigide 110 de la boîte électrique 100, constituée par la paroi latérale 110A et le fond 110B, et chaque pastille rigide 130 sont préférentiellement réalisées avec la même matière plastique et les membranes souples 120 sont réalisées avec une autre matière plastique.

La matière plastique utilisée pour mouler la partie rigide 110 de la boîte électrique 100 et chaque pastille rigide 130 est avantageusement une matière thermoplastique telle qu'un polystyrène, un polypropylène auto extinguible, ou un polyéthylène haute pression, ou encore un polyamide.

La matière plastique utilisée pour mouler lesdites membranes souples est avantageusement une matière élastomère telle qu'un caoutchouc ou un styrène éthylène butylène styrène (SEBS).

Préférentiellement, chaque membrane souple 120 est surmoulée sur ladite partie rigide 110 et sur chaque pastille rigide 130 préalablement moulées dans le moule correspondant.

Selon le mode de réalisation représenté sur les figures 1 à 3, l'injection de la matière thermoplastique dans le moule pour la réalisation desdites pastilles rigides 130 se fait en étoile sensiblement à partir du centre du fond 110B de la boîte électrique 100. On visualise alors plus particulièrement sur la figure 1 les lignes 130A d'injection de la matière thermoplastique qui sont collées sur une face, ici la face externe, desdites membranes souples 120.

Comme le montrent plus particulièrement les figures 1 à 3, avantageusement chaque membrane souple 120 et chaque pastille rigide 130 associées s'étendent en partie sur ladite paroi latérale 110A et en partie sur le fond 110B de la boîte électrique 100.

Ici, chaque membrane souple 120 présente un contour 120A oblong, mais selon une variante non représentée on peut prévoir que le contour de chaque membrane souple soit circulaire.

Chaque pastille rigide 130 obture chaque ouverture 121 oblongue de chaque membrane souple 120.

Selon l'exemple représenté sur les figures, la face externe de chaque membrane souple 120 vient à effleurement de la face externe de la partie rigide 110 de la boîte électrique 100.

Cependant selon une variante de réalisation non représentée on peut prévoir que la face externe de chaque membrane souple soit située en retrait de la face externe de la paroi latérale de la boîte électrique et vient à effleurement de la face externe du fond de cette boîte.

L'introduction d'une gaine 10 d'amenée de câbles et/ou de conducteurs électriques dans ladite boîte électrique 100 se fait de la manière suivante.

L'installateur détache manuellement la pastille rigide 130 de la membrane souple 120 considérée pour dégager son ouverture 121.

Cette opération de détachement de la pastille rigide est réalisée aisément avec deux doigts par l'installateur car la liaison de la pastille rigide à la membrane souple le long du contour de ladite ouverture, obtenue lors du surmoulage de ladite membrane, est une liaison à faible résistance.

Ainsi, lors du détachement de ladite pastille rigide 130, la membrane souple 120 reste intacte, seule son ouverture 121 est dégagée.

Puis, l'installateur pousse l'extrémité de la gaine 10 cannelée au travers de l'ouverture 121 pour en introduire une certaine longueur dans ladite boîte électrique 100 (voir figure 4). La membrane souple 120 est engagée dans une cannelure de la gaine 10 pour être accrochée à celle-ci. De cette manière, l'installateur peut tirer les câbles et/ou les conducteurs électriques contenus dans ladite gaine 10 et les raccorder facilement à l'appareillage électrique en question.

Puis, l'installateur repousse vers l'extérieur la gaine 10 au travers de l'ouverture 121 de ladite membrane souple 120 pour ne laisser qu'une petite longueur de gaine à l'intérieur de la boîte électrique 100 et dégager l'espace intérieur de ladite boîte pour permettre le montage du mécanisme d'appareillage (voir figure 5).

Lors de cette opération de pousser et de repousser la membrane souple 120 se déforme pour rester en contact avec la face externe cannelée de la gaine 10 (voir figure 6).

Avantageusement, comme le montre la figure 7, du fait que chaque membrane souple 120 et chaque ouverture 121 associées s'étendent sur la paroi latérale 110A et le fond 110B de la boîte électrique 100, ladite boîte électrique 100 permet de rapporter l'extrémité de chaque gaine 10 de transport de câbles et/ou de conducteurs électriques en autorisant un mouvement de pivotement de la gaine 10 d'une amplitude de 90° tout en assurant au niveau de l'entrée de la gaine dans la boîte électrique une étanchéité à l'air et/ou à la poussière.

Ainsi, lors de la mise en place de la boîte électrique 100 dans une cloison sèche, l'installateur peut amener chaque gaine 10 dans chaque ouverture 121 de chaque membrane souple 120 de telle manière que l'axe X1 de la gaine 10 s'étend parallèlement à l'axe X de la boîte électrique (voir figure 7), puis il peut faire pivoter chaque gaine 10 de 90°, grâce à la déformation de chaque membrane souple 120, de façon à mettre en position définitive la boîte électrique 100 dans la cloison sèche, position dans laquelle l'axe X1 de chaque gaine 10 s'étend perpendiculairement à l'axe X de la boîte électrique.

La présente invention n'est nullement limitée au mode de réalisation décrit et représenté mais l'homme du métier saura y apporter toute variante dans le cadre, des revendications.

## Revendications

1. Boîte électrique (100) à encastrer comprenant une partie rigide (110) qui comporte une paroi latérale (110A) s'élevant à partir d'un fond (110B) et qui est pourvue localement d'au moins une membrane souple (120) percée d'une ouverture (121) destinée à accueillir l'extrémité coupée d'une gaine (10) de transport de câbles et/ou de conducteurs électriques, ladite ouverture (121) étant obturée par une pastille rigide (130) détachable qui forme avec ladite membrane souple (120) et ladite partie rigide (110) une pièce monobloc réalisée par moulage d'une matière plastique, **caractérisée en ce que** chaque membrane souple (120) et chaque pastille rigide (130) associée s'étendent sur ladite paroi latérale (110A) et sur ledit fond (110B).

2. Boîte électrique selon la revendication 1, **caractérisée en ce que** chaque membrane souple présente une face externe qui vient à effleurement de la face externe dudit fond et qui est située en retrait de la face externe de ladite paroi latérale.

3. Boîte électrique (100) selon la revendication 1, **caractérisée en ce que** chaque membrane souple (120) présente une face externe qui vient à effleurement de la face externe de ladite partie rigide (110).

4. Boîte électrique (100) selon l'une des revendications précédentes, **caractérisée en ce que** chaque membrane souple (120) présente un contour (120A) oblong.

5. Boîte électrique (100) selon l'une des revendications précédentes, **caractérisée en ce que** la partie rigide (110) et chaque pastille rigide (130) sont réalisées avec la même matière rigide.

6. Boîte électrique (100) selon l'une des revendications précédentes, **caractérisée en ce que** ladite partie rigide (110) et chaque pastille rigide (130) sont réalisées par moulage d'une matière thermoplastique telle qu'un polystyrène, un polypropylène ou un polyamide.

7. Boîte électrique (100) selon l'une des revendications précédentes, **caractérisée en ce que** chaque membrane souple (120) est réalisée par moulage d'une matière élastomère telle qu'un caoutchouc ou un styrène éthylène butylène styrène (SEBS).

8. Boîte électrique (100) selon l'une des revendications précédentes, **caractérisée en ce que** chaque membrane souple (120) est surmoulée sur ladite partie rigide (110) et sur chaque pastille rigide (130).

9. Boîte électrique (100) selon l'une des revendications précédentes, **caractérisée en ce qu'**elle comporte une pluralité de membrane souple (120) réparties sur son pourtour formant une pluralité d'entrées de gaine.

## Claims

1. An electrical box (100) for flush-mounting, the box comprising a rigid portion (110) that includes a side wall (110A) projecting from a back wall (110B) that is provided locally with at least one flexible diaphragm (120) pierced by an opening (121) for receiving the cut end of a duct (10) for transporting a cable and/or electrical conductors, said opening (121) being closed by a detachable rigid pellet (130) that co-operates with said flexible diaphragm (120) and said rigid portion (110) to form an integrally molded part of plastics material, the box being **characterized in that** each flexible diaphragm (120) and each associated rigid pellet (130) extends over said side wall (110A) and over said back wall (110B).

2. An electrical box according to claim 1, **characterized in that** the flexible diaphragm presents an outside face that comes flush with the outside face of said back wall and that is set back from the outside face of said side wall.

3. An electrical box (100) according to claim 1, **characterized in that** each flexible diaphragm (120) presents an outside face that comes flush with the outside face of said rigid portion (110).

4. An electrical box (100) according to any preceding claim, **characterized in that** each flexible diaphragm (120) presents an oblong outline (120A).

5. An electrical box (100) according to any preceding claim, **characterized in that** the rigid portion (110) and each of the rigid pellets (130) are made with the same rigid material.

6. An electrical box (100) according to any preceding claim, **characterized in that** said rigid portion (110) and each of the rigid pellets (130) are made by molding a thermoplastic material such as a polystyrene, a polypropylene, or a polyamide.

7. An electrical box (100) according to any preceding claim, **characterized in that** each flexible diaphragm (120) is made by molding an elastomer material such as a rubber or a styrene ethylene butylene styrene (SEBS).

8. An electrical box (100) according to any preceding claim, **characterized in that** each flexible diaphragm (120) is molded onto said rigid portion (110) and onto each rigid pellet (130).

9. An electrical box (100) according to any preceding claim, **characterized in that** it has a plurality of flexible diaphragms (120) distributed around its periphery, forming a plurality of duct inlets.

## Patentansprüche

1. Elektrische in die Wand einzulassende Anschlussdose (100) mit einem formfesten Bereich (110), der eine Seitenwand (110A) umfasst, die von einem Boden (110B) ausgeht und an einigen Stellen mindestens eine weiche Membran (120) aufweist, die von einer Öffnung (121) zur Aufnahme des abgeschnittenen Endes einer Hülle (10) für den Transport von Kabeln und/oder elektrischen Leitungen durchdrungen ist, wobei diese Öffnung (121) durch ein formfestes, abziehbares Plättchen (130) geschlossen ist, das zusammen mit der weichen Membran (120) und dem formfesten Bereich (110) ein einziges Teil bildet, das aus einem Kunststoff gussgeformt wird, **dadurch gekennzeichnet, dass** sich jede weiche Membran (120) und jedes dazugehörige formfeste Plättchen (130) auf der Seitenwand (110A) und auf dem Boden (110B) erstrecken.

2. Elektrische Anschlussdose nach Anspruch 1, **dadurch gekennzeichnet, dass** jede weiche Membran eine Außenseite aufweist, die die Außenseite des Bodens leicht berührt und in Bezug auf die Außenseite der Seitenwand nach hinten versetzt ist.

3. Elektrische Anschlussdose (100) nach Anspruch 1, **dadurch gekennzeichnet, dass** jede weiche Membran (120) eine Außenseite aufweist, die die Außenseite des formfesten Bereichs (110) leicht berührt.

4. Elektrische Anschlussdose (100) nach einem der vorausgehenden Ansprüche, **dadurch gekennzeichnet, dass** jede weiche Membran (120) eine längliche Kontur (120A) aufweist.

5. Elektrische Anschlussdose (100) nach einem der vorausgehenden Ansprüche, **dadurch gekennzeichnet, dass** der formfeste Bereich (110) und jedes formfeste Plättchen (130) aus demselben formfesten Material hergestellt sind.

6. Elektrische Anschlussdose (100) nach einem der vorausgehenden Ansprüche, **dadurch gekennzeichnet, dass** der formfeste Bereich (110) und jedes formfeste Plättchen (130) aus einem thermoplastischen Material wie Polystyrol, Polypropylen oder Polyamid gussgeformt sind.

7. Elektrische Anschlussdose (100) nach einem der vorausgehenden Ansprüche, **dadurch gekennzeichnet, dass** jede weiche Membran (120) aus einem Elastomer-Material wie Gummi oder Styrol-Ethylen-Butylen-Styrol (SEBS) gussgeformt ist.

8. Elektrische Anschlussdose (100) nach einem der vorausgehenden Ansprüche, **dadurch gekennzeichnet, dass** jede weiche Membran (120) auf dem formfesten Bereich (110) und auf jedem formfesten Plättchen (130) umspritzt wird.

9. Elektrische Anschlussdose (100) nach einem der vorausgehenden Ansprüche, **dadurch gekennzeichnet, dass** sie eine Vielzahl von weichen Membranen (120) umfasst, die über ihren Umfang verteilt eine Vielzahl von Eingängen für Hüllen bilden.
